**Europäisches Patentamt**

**European Patent Office**

**Office européen des brevets**

(19)

(11) Publication number: **0 218 074
B1**

(12) # EUROPEAN PATENT SPECIFICATION

(45) Date of publication of the patent specification: **18.10.89**

(51) Int. Cl.⁴: **F16D 55/02, F16D 55/22**

(21) Application number: **86111776.0**

(22) Date of filing: **26.08.86**

(54) Brake pad retention spring, in particular for spot-type disc brakes for automotive vehicles.

(30) Priority: **11.09.85 DE 3532373
14.02.86 DE 3604620**

(43) Date of publication of application:
**15.04.87 Bulletin 87/16**

(45) Publication of the grant of the patent:
**18.10.89 Bulletin 89/42**

(84) Designated Contracting States:
**DE FR IT**

(56) References cited:
**DE-A- 2 236 750
GB-A- 1 498 922
GB-A- 2 129 511
GB-A- 2 147 376**

(73) Proprietor: **ALFRED TEVES GmbH,
Guerickestrasse 7 Postfach 90 01 20, D-6000 Frankfurt
am Main(DE)**

(72) Inventor: **Thiel, Rudolf, Am Ebelfeld 179,
D-6000 Frankfurt/Main 90(DE)**
Inventor: **Zaviska, Dalibor, Siegener Strasse 63,
D-6000 Frankfurt am Main 80(DE)**
Inventor: **Klimt, Ulrich, Im Matthäuskreuz 10,
D-6109 Mühltal 3(DE)**

(74) Representative: **Grau, Ulf, c/o ALFRED TEVES GMBH
Guerickestrasse 7, D-6000 Frankfurt (M) 90(DE)**

ACTORUM AG

**Description**

This invention relates to a brake pad retention spring, in particular for spot-type disc brakes for automotive vehicles, according to the preamble of patent claim 1.

A retention spring of the type referred to above is known from the Brake Handbook of ALFRED TEVES GMBH, Bartsch-Verlag, Ottobrunn, 8th new edition, page 201. This known retention spring serves to hold the brake pad against a brake member, particularly the brake piston, without clearance. The known spring has, however, certain disadvantages in respect of assembly and function. In this connection, particularly its large overall length is to be mentioned which, in the case of a radial pad replacement, permits the inboard brake pad which is provided with such a retention spring, to be assembled with the caliper in its mounted position, provided that the thickness of the outboard brake pad is greater than the length of the spring. Since the known spring is required to be up to about 25 mm long to fulfill its function, even sliding calipers allow such assembly only in some cases. Further, the use of the known retention spring often requires components such as brake carrier members, for example, which obstruct radial pad assembly, to be recessed or relocated inwardly by such high an amount that the direction of force lines may be adversely affected and additional bending moments may develop.

It is, therefore, an object of this invention to provide a retention spring of the type identified in the preamble of patent claim 1 which, also with the brake pads conventionally thin, affords a simple way of changing the brake pads radially while the housing is in its mounted position.

This object is accomplished according to the invention by the features characterizing patent claim 1.

The solution of the invention provides a pad retention spring which avoids the above-mentioned drawbacks. The configuration of the radially extending spring arm as disclosed in the invention enables it to produce the same spring force as known springs having arms about twice its length. This permits a substantial reduction of the overall length so that also brake pads of a thickness of only about 11 mm can be fitted radially without the holding function being impaired. In this arrangement, a force component is applied causing the brake pad to be biased into abutment with the brake caliper and thereby excluding the tendency to rattle, with the clearances developing as a result of tolerances of the individual components being eliminated. The two spring arms extending in the secantial direction have substantially the function to hold the pad against the appropriate component, particularly against the piston, whereas the radial spring arm applies the spring force necessary to keep the pad biased in abutment with the caliper or the brake carrier. In this arrangement, the forces have to be coordinated such as to produce a low bias, enabling the brake pad to be displaced parallel to the plane of the backing plate with ease.

In accordance with an advantageous embodiment of the invention, the middle portion of the bent, in particular S-shaped, section extends substantially in the secantial direction. In this embodiment, the bent section is suitably arranged in the region of the one spring arm extending in the secantial direction or at the fastening section adjacent to that spring arm, which enables the S-shaped section to be of a broad construction without requiring additional space.

In accordance with another advantageous embodiment, the spring arms extending in the secantial direction are arranged at an angle relative to the tangential plane which is substantially in the range of between 5° and 15°. By virtue of this configuration, they support the radially acting spring arm since they invariably tend to force the brake pad downwards in the direction of force of the bent spring arm without thereby impairing the resilience by an increased resistance, because the frictional resistance is adjusted as a result of the inclined position. In the known retention spring, already a minor off-center condition involves the risk of a spring arm becoming bent and folding outwardly. Bending the spring arm back may cause it to break eventually. Therefore, an advantageous embodiment of the invention provides for bending of the end portions of the spring arms towards the backing plate. This makes it more difficult for the spring arms to become bent and jammed at the piston. In addition, this arrangement facilitates the insertion of the retention spring.

Since the bearing spots of the known retention spring are undefined in the region of the spring arms, poor seating in the piston may result and consequently an inaccurate definition of spring excursion and spring force (wide scatter). In accordance with an advantageous embodiment of the invention, therefore, the portions of the spring arms abutting the piston are suitably profiled, in particular, bulged, and are conformed to the curvature of the piston such that only a point or line contact is established between the parts. This improves the slip during assembly (less resistance because the necessity of cutting in edges is obviated) and the seating in the piston while the spring force and the spring excursion can be clearly determined. In view of three defined bearing spots, low fluctuations result. This is of particular importance for the arms extending in the secantial direction in order to maintain the angular range identified above.

The claw-type spring may be secured to the backing plate by means of notched nails, rivets, screws, by caulking or spot-welding, or the like. An additional means to secure the brake pad in its position is not required. Even should a spring arm break, the pad will continue to be held captive by the remaining spring portions.

Another favourable embodiment of the invention allows to still further reduce the spring length in the axial direction. This achieves smaller space requirement in the assembly. The two spring arms extending substantially in the secantial direction assist the radially acting spring arm still more in pressing the brake pad onto the retaining arrangement and the housing, respectively. Owing thereto, radial pad replacement is possible while the housing is in its mounted position. An additional means to secure the brake pad in position is not required. Even should one of the spring arms break, the pad will continue to be held captive by the remaining spring portions. The special design of the spring likewise affords very simple manufacture at reduced cost.

According to an advantageous embodiment of this solution, two legs of the arms forming the U-shaped or V-shaped bent section extend transversely, that means in the radial direction. By virtue of this, a particularly good resiliency of these spring arms in the secantial direction is accomplished. In another embodiment in which the arms extending in the secantial direction comprise end sections which extend substantially in the secantial direction and which are arranged on the backing plate such that their ends abut on the brake piston above the centre line of said, a precisely defined bearing point on the brake piston will result, whereby the radially acting spring arm is still further assisted in pressing the brake pad onto the retaining arrangement and onto the brake housing, respectively.

According to another favourable embodiment of this invention, it is arranged for that the spring arm extendng substantially in the radial direction comprises an end section extending in the radial direction.

Expediently, all sections of the spring arms are located in planes which extend substantially vertically to the backing plate. This results in ease of manufacture and thus in rendering the spring less costly due to the straightforward winding and design of the spring arms. The waste of material can be kept very low. In a very favourable manner, noses are provided at the end sections of the spring arms extending in the secantial direction, which noses show to the pad backing plate and which form projections in the circumferential direction by which the spring engages into corresponding grooves or the like designed at the brake member.

Embodiments of the invention will now be described in the following with reference to the accompanying drawings, wherein:

Fig. I is a view of the rear side of a brake pad provided with a retention spring;
Fig. 2 is a sectional view of the retention spring of Fig. I, taken along the line A-A of that Figure,
Fig. 3 is a sectional view of the retention spring of Fig. I, taken along the line B-B of that Figure, and
Fig. 4 is a view of the rear side of a brake pad provided with a retention spring embodying a different configuration,
Fig. 5 is a view of the rear side of a brake pad provided with a retention spring;
Fig. 6 is a sectional view of the pad of Fig. 5, taken along the line A-A of that Figure,
Fig. 7 is a plan view of the retention spring,
Fig. 8 is a side view of the retention spring, and
Fig. 9 is an inwardly straddling disc brake with an inner brake pad which is attached to the brake piston by means of a retention spring.

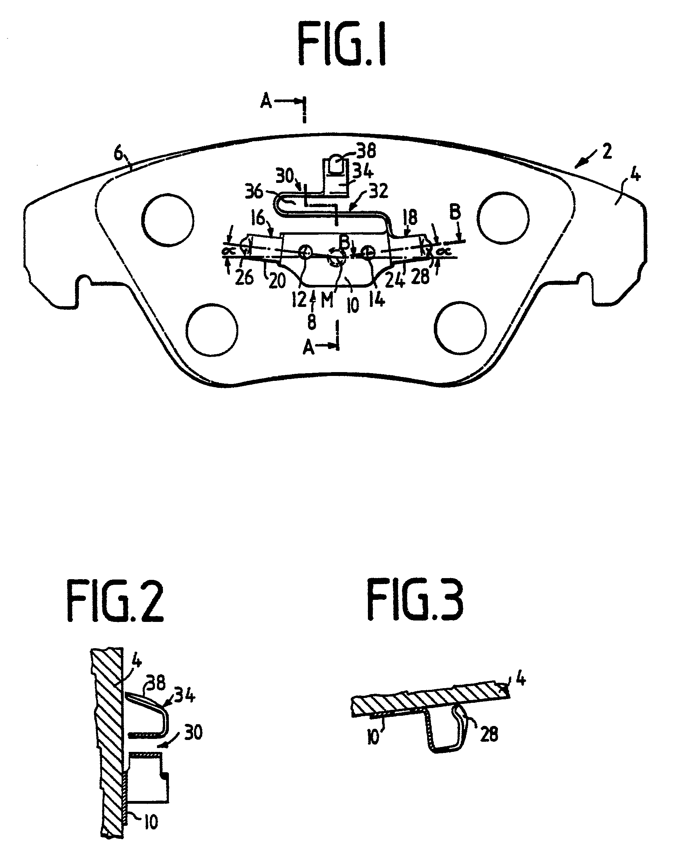

Referring now to FIGS. 1 to 3 of the drawing, there is illustrated a brake pad 2 for a spot-type disc brake which has a metallic backing plate 4 with the actual friction lining 6 (shown in broken lines) affixed to its front side. A retention spring 8 is secured to the backing plate 4.

The retention spring 8 has a substantially rectangular fastening section 10 whose lower corners are cut off. The fastening section 10 has two through holes 12, 14 serving to secure the retention spring 8 to the backing plate 4. For this purpose, notched nails, rivets, screws and the like are suitably used. Other fastening methods such as caulking or spot-welding or the like may also be applied.

Extending from the sides of the fastening section 10 are two spring arms 16, 18 having their central axes extend through the center point M at an angle relative to the tangential plane which is essentially in the range of between 5° and 15° and amounts to 7°, for example. The spring arms 16,18 are bent in several places, forming a substantially U-shaped end section 20, 24 as becomes apparent particularly from the sectional view of FIG. 3 illustrating the spring arm 18. The extreme ends of these end sections 20, 24 extend towards the backing plate 4, forming another angle of about 30°. In the region of these angles, they are profiled as at 26, 28 to provide defined bearing spots.

A third spring arm 30 has a bent, in this embodiment particulary an S-shaped section 32 continuing in a radially extending end section 34. The S-shaped section 32 begins adjacent to the fastening section 10 in the region of the spring arm 18. In the manufacture of the retention spring 8 in which the U-shaped end section 24 of the spring arm 18 is formed by bending over, the portion forming the S-shaped section 32 is thus in a plane extending substantially perpendicular to the plane of the fastening section 10. The middle portion 36 of the S-shaped section 32 extends substantially in the secantial direction, approximately over the width of the fastening section 10. Similar to the end sections of the spring arms 16, 18, the end section 34 of the spring arm 30 is likewise bent in several places as becomes apparent from the sectional view of FIG. 2, with its end being substantially of U-shape and having its extreme end extend in the direction of the backing plate and profiled as at 38.

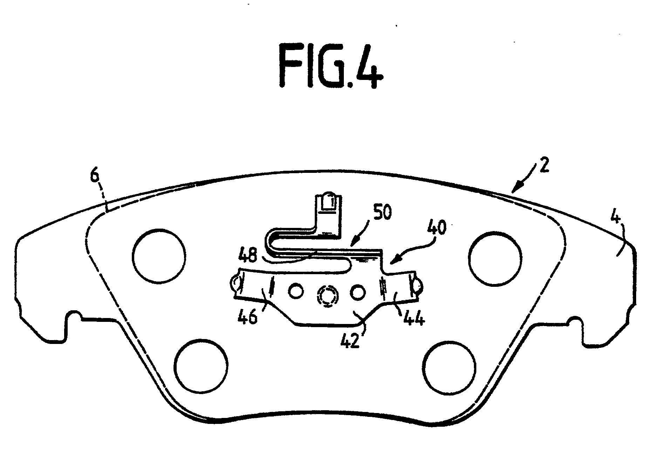

In the embodiment of FIG. 4, a retention spring 40 is provided which is substantially identical to the retention spring 8 in respect of its fastening section 42 and the arms 44, 46 extending in the secantial direction. By contrast with the retention spring 8, however, the bent portion 48 of the radially extending spring arm 50 is provided in the region of the fastening section 42, which results in a different spring excursion for this particular arm.

Since, among other things, the retention springs of the invention are to permit a displacement of the brake pad, it may be useful to introduce suitable means to reduce the friction of that area of the pad backing plate which is held against the appropriate brake member by means of the spring. To this end, for example, a piece of sheet metal may be used which rests on the backing plate underneath the retention spring and is secured to the retention spring.

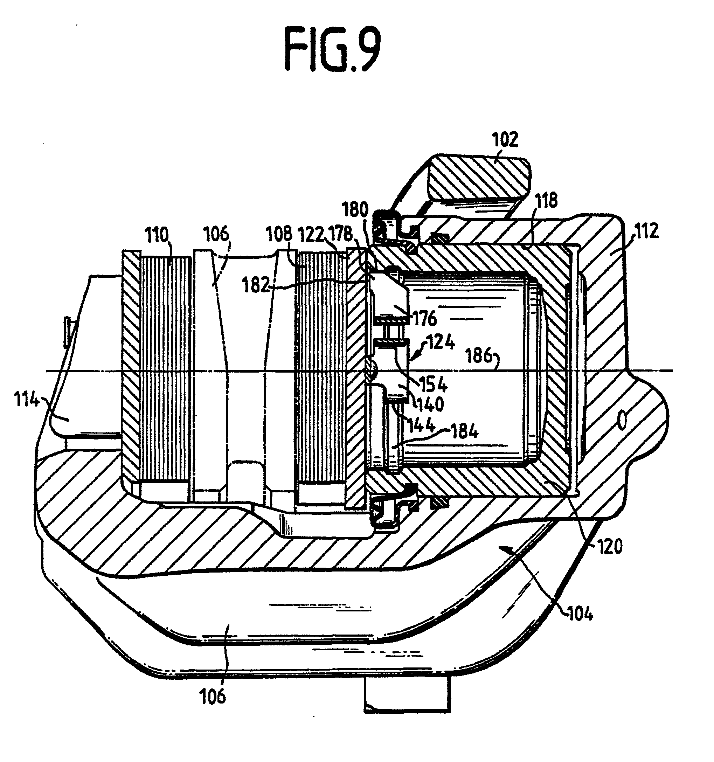

The inwardly embracing disc brake illustrated in Fig. 9 comprises a brake carrier 102 rigidly mounted on the vehicle as well as a brake housing 104 axially slidably supported on the brake carrier 102, the said brake housing embracing the inner edge of a brake disc 106 (indicated by a dash-dot line) and two brake pads 108, 110 arranged on either side of the brake disc 106. The brake housing 14 is of substantially U-shaped configuration having two radially extending legs 112, 114 which are interconnected through a substantially axially extending bridge section 116. In the inward leg 112, an actuating device is arranged which comprises a piston 120 slidable in a cylinder bore 118 and abutting with its open side on the backing plate 122 of the brake pad 108.

The brake pad 108 is secured to the piston 120 by a retention spring 124.

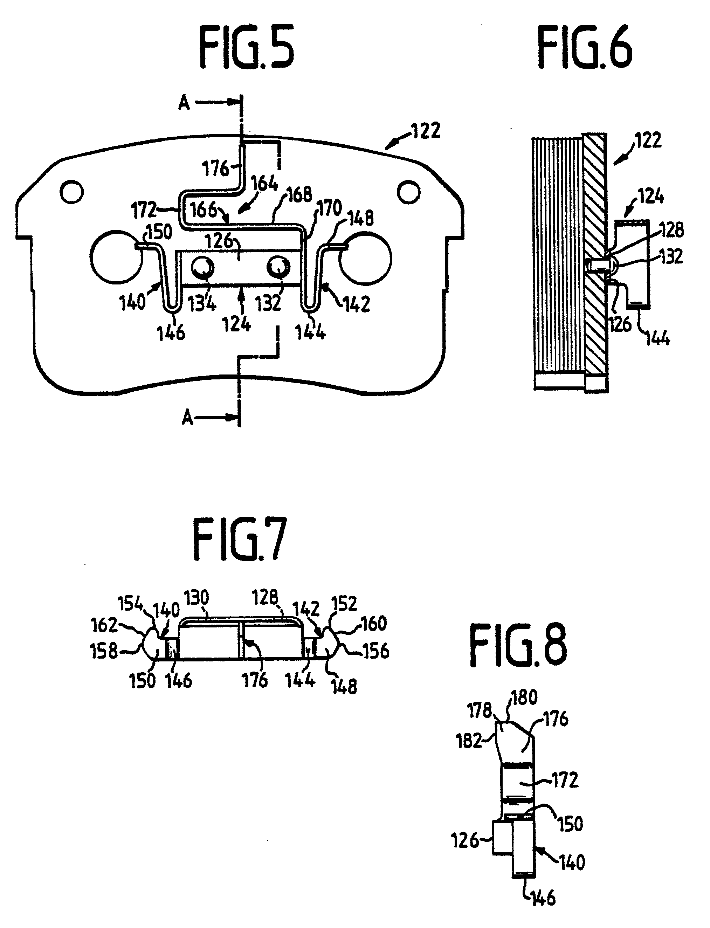

The brake pad 108 with retention spring 124 is illustrated in detail in Figs. 5 to 8, to which now reference is made. The retention spring 124 comprises a substantially rectangular fastening section 126 containing two through holes 128, 130, in order to secure the retenton spring 124 to the backing plate by means of rivets 132, 134. Other fastening methods such as caulking or spot-welding or the like may also be applied.

Extending from the sides of the fastening section 126 are two spring arms 140, 142 being in particular integrally designed with the fastening section 126. Said spring arms 140, 142 have U-shaped sections 144, 146, the open side of the U showing upwards. Succeeding the sections 144, 146 are end sections 148, 150 which extend in the secantial direction and whose ends, in the mounted condition, are disposed above the horizontal centre line of the piston 120. Designed at the end sections 148, 150 are noses 152, 154 which are directed to the backing plate 122. The end sections likewise form projections 156, 158 which extend in the secantial direction and which, in the mounted condition, engage into corresponding indentations in the associated brake member, that is the brake piston 120 in the instant case. For this purpose, transversely extending abutment surfaces 160, 162 are designed at the projections 156, 158, the said abutment surfaces taking support in the annular groove 184 of the piston 120 and thus draw the brake pad 108 axially to the piston.

The spring arm 142, which is on the right side in the illustration, passes into a substantially radially extending spring arm 164 having an S-shaped section 166 whose mid-portion 168 extends substantially in the secantial direction and whose legs 170, 172 adjacent thereto extend substantially radially. Adjoining the leg 172 is a section 174 which extends in parallel to the mid-portion 168 up to roughly the middle thereof and which then passes into an end section 176 that is disposed on the centre line of the pad and extends radially. Said end section 176 forms an axially protruding nose 178 having abutment surfaces 180, 182 for the pad and for the inner piston wall, respectively.

As becomes apparent from Fig. 9, the nose 178 of the end section 176 bears with the bearing surface 180 against the inner wall of the brake piston 120.

Said nose 178 bears against the backing plate during the assembly only. In the operating condition, a play of 0.5 to 1 mm approximately will result. The noses 152, 154 of the spring arms 140, 142 engage into an annular groove 184 provided at the inner surface of the piston. As the noses are arranged above the centre line 186 of the piston, a force is exerted by the piston inner wall onto the noses which aims at urging the retention spring 124 and hence the brake pad 108 towards the brake disc axis. The frictional resistance in the direction of force of the spring arm 164 can be precluded thereby.

**Claims**

1. A brake pad retention spring (8, 40, 124), in particular for spot-type disc brakes for automotive vehicles, including a fastening section (10, 42, 126) for securing it to a pad backing plate (4, 122) and spring arms (16, 18, 30, 44, 46, 50, 140, 142, 164) for engagement into a brake member (20), wherein two spring arms (16, 18, 44, 46, 140, 142) extend substantially in the secantial direction in relation to the brake disc and a third spring arm (30, 50, 164) extends substantially in the radial direction, characterized in that the spring arm (30, 50, 164) has a bent section (32, 48, 166) extending substantially parallel to the backing plate (4, 122) and having an adjacent end section (34, 176) extending substantially radially.

2. A retention spring as claimed in claim 1, characterized in that the middle portion (36, 168) of the bent section (32, 48, 166) extends substantially in the secantial direction.

3. A retention spring as claimed in claim 1 or claim 2, characterized in that the bent section (32, 166) is arranged in the region of the one spring arm (18, 142) extending in the secantial direction.

4. A retention spring as claimed in claim 1 or claim 2, characterized in that the bent section (48) is arranged at the fastening section (42) adjacent to the one spring arm (44) extending in the secantial direction.

5. A retention spring as claimed in any one of the preceding claims, characterized in that the spring arms (16, 18) extending in the secantial direction are arranged at an angle relative to the tangential plane which is substantially in the range of between 5° and 15°.

6. A retention spring as claimed in any one of the preceding claims, characterized in that the end portions of the spring arms (16, 18, 30) are bent towards the backing plate (4).

7. A retention spring as claimed in any one of the preceding claims, characterized in that the end portions of the spring arms (16, 18, 30) are profiled (26, 28, 38).

8. A retention spring as claimed in any one of the preceding claims, characterized in that the width of the bent, in particular S-shaped section (32) corresponds substantially to the width of the fastening section (10).

9. A brake pad retention spring (8, 40, 124), in particular for spot-type disc brakes for automotive vehicles, including a fastening section (10, 42, 126) for securing it to a pad backing plate (4, 122) and spring arms (16, 18, 30, 44, 46, 50, 140, 142, 164) for engagement into a brake member (20), wherein two spring arms (16, 18, 44, 46, 140, 142) extend substantially in the secantial direction (main direction of spring) in relation to the brake disc and a third spring arm (30, 50, 164) extends substantially in the radial direction (main direction of spring), according to any one of the preceding claims, characterized in that the spring arms (140, 142) extending in the secantial direction comprise U-shaped or V-shaped bent sections (144, 146).

10. A retention spring as claimed in claim 9, characterized in that two legs of the spring arms (140, 142) forming the U-shaped or V-shaped bent section extend transversely to the secantial direction.

11. A retention spring as claimed in claim 9 or 10, characterized in that the spring arms (140, 142) extending in the secantial direction have end sections (148, 150) which extend substantially in the secantial direction and which are arranged at the backing plate (122) such that their ends abut on the brake piston (120) above said's centre line (186).

12. A retention spring as claimed in any one of the claims 9 to 11, characterized in that the spring arm (164) extending substantially in the radial direction has an end section (176) extending in the radial direction.

13. A retention spring as claimed in any one of the claims 9 to 12, characterized in that all sections of the spring arms (140, 142, 164) are disposed in planes which extend substantially vertically to the backing plate.

14. A retention spring as claimed in any one of the preceding claims, characterized in that the spring arms (140, 142) extending substantially in the secantial direction have noses (152, 154) protruding in the axial direction.

15. A retention spring as claimed in any one of the preceding claims, characterized in that the substantially radially extending spring arm (164) has a nose (178) protruding in the axial direction.

**Revendications**

1. Ressort (8, 40, 124) de maintien de plaquette de frein, notamment pour freins à disques à garnitures partielles pour véhicules automobiles, comprenant une portion de fixation (10, 42, 126) permettant de le fixer sur une plaque de support de plaquette (4, 122) et des bras de ressort (16, 18, 30, 44, 46, 50, 140, 142, 164) destinés à coopérer avec un élément de frein (20), deux bras de ressort (16, 18, 44, 46, 140, 142) s'étendant sensiblement suivant la direction sécante par rapport au disque de frein et un troisième bras de ressort (30, 50, 164) s'étendant sensiblement suivant la direction radiale, caractérisé en ce que le troisième bras de ressort (30, 50, 164) possède une portion pliée (32, 48, 166) qui s'étend de manière sensiblement parallèle à la plaque de support (4, 122) et comporte une portion extrême adjacente (34, 176) qui s'étend de manière sensiblement radiale.

2. Ressort de maintien suivant la revendication 1 caractérisé en ce que la partie intermédiaire (36, 168) de la portion pliée (32, 48, 166) s'étend sensiblement suivant la direction sécante.

3. Ressort de maintien suivant l'une des revendications 1 ou 2, caractérisé en ce que la portion pliée (32, 166) est agencée dans la zone du bras de ressort (18, 142) qui s'étend suivant la direction sécante.

4. Ressort de maintien suivant l'une des revendications 1 ou 2, caractérisé en ce que la portion pliée (48) est agencée à l'endroit de la portion de fixation (42) qui est adjacente au bras de ressort (44) qui s'étend dans la direction sécante.

5. Ressort de maintien suivant l'une quelconque des revendications précédentes, caractérisé en ce que les bras de ressort (16, 18) qui s'étendent suivant la direction sécante sont disposés par rapport au plan tangentiel sous un angle qui est sensiblement dans la gamme de valeurs comprise entre 5° et 15°.

6. Ressort de maintien suivant l'une quelconque des revendications précédentes, caractérisé en ce que les parties extrêmes des bras de ressort (16, 18, 30) sont incurvés vers la plaque de support (4).

7. Ressort de maintien suivant l'une quelconque des revendications précédentes, caractérisé en ce que les parties extrêmes des bras de ressort (16, 18, 30) sont profilées (26, 28, 38).

8. Ressort de maintien suivant l'une quelconque des revendications précédentes, caractérise en ce que la largeur de la portion pliée, notamment en forme de S, (32) correspond sensiblement à la largeur de la portion de fixation (10).

9. Ressort (8, 40, 124) de maintien de plaquette de frein, notamment pour freins à disques à garnitures partielles pour véhicules automobiles, comprenant une portion de fixation (10, 42, 126) permettant de le fixer sur une plaque de support de plaquette (4, 122) et des bras de ressort (16, 18, 30, 44, 46, 50, 140, 142, 164) destinés à coopérer avec un élément de frein (20), deux bras de ressort (16, 18, 44, 46, 140, 142) s'étendant sensiblement suivant la direction sécante (direction principale du ressort) par rapport au disque de frein et un troisième bras de ressort (30, 50, 164) s'étendant sensiblement suivant la direction radiale (direction principale du ressort), caractérisé en ce que les bras de ressort (140, 142) s'étendant suivant la direction sécante comprennent des portions pliées en forme de U ou en forme de V (144, 146).

10. Ressort de maintien suivant la revendication caractérisé en ce que deux branches des bras de ressort (140, 142) formant la portion pliée en U ou en V s'étendent transversalement à la direction sécante.

11. Ressort de maintien suivant l'une des revendications 9 ou 10, caractérisé en ce que les bras de ressort (140, 142) qui s'étendent suivant la direction sécante comportent des portions extrêmes (148, 150) qui s'étendent sensiblement suivant la direction sécante et qui sont disposées à l'endroit de la plaque de support (122) de façon que leurs extrémités soient en butée contre le piston de frein (120) au-dessus de son axe géométrique (186).

12. Ressort de maintien suivant l'une quelconque des revendications 9 à 11, caractérisé en ce que le bras de ressort (164) qui s'étend sensiblement suivant la direction radiale comporte une portion extrême (176) s'étendant suivant la direction radiale.

13. Ressort de maintien suivant l'une quelconque des revendications 9 à 12, caractérisé en ce que toutes les portions du bras de ressort (140, 142, 164) sont situées dans des plans qui s'étendent d'une manière sensiblement verticale par rapport à la plaque de support.

14. Ressort de maintien suivant l'une quelconque des revendications précédentes, caractérisé en ce que les bras de ressort (140, 142) s'étendant sensiblement suivant la direction sécante comportent des becs (152, 154) faisant saillie suivant la direction axiale.

15. Ressort de maintien suivant l'une quelconque des revendications précédentes, caractérisé en ce que le bras de ressort (164) s'éntendant de manière sensiblement radiale comporte un bec (178) faisant saillie suivant la direction axiale.

**Patentansprüche**

1. Haltefeder (8, 40, 124) für Bremsbeläge, insbesondere bei Teilbelag-Scheibenbremsen für Kraftfahrzeuge, mit einem Befestigungsabschnitt (10, 42, 126) zur Befestigung an einer Belagrückenplatte (4, 122) und mit Federarmen (16, 18, 30, 44, 46, 50, 140, 142, 164) zum Eingriff in ein Bremsenteil (20), wobei zwei Federarme (16, 18, 44, 46, 140, 142) sich, bezogen auf die Bremsscheibe, im wesentlichen in Sekantenrichtung erstrecken und ein dritter Federarm (30, 50, 164) im wesentlichen in radialer Richtung verläuft, dadurch gekennzeichnet, daß der Federarm (30, 50, 164) einen gebogenen Abschnitt (32, 48, 166) aufweist, der sich im wesentlichen parallel zur Rückenplatte (4, 122) erstreckt und an den ein im wesentlichen radial verlaufender Endabschnitt (34, 176) angrenzt.

2. Haltefeder nach Anspruch 1, dadurch gekennzeichnet, daß der mittlere Teil (36, 168) des gebogenen Abschnittes (32, 48, 166) sich im wesentlichen in Sekantenrichtung erstreckt.

3. Haltefeder nach Anspruch 1 oder 2, dadurch gekennzeichnet, daß der gebogene Abschnitt (32, 166) im Bereich des einen, sich in Sekantenrichtung erstreckenden Federarmes (18, 142) angebracht ist.

4. Haltefeder nach Anspruch 1 oder 2, dadurch gekennzeichnet, daß der gebogene Abschnitt (48) neben dem einen, sich in Sekantenrichtung erstreckenden Federarm (44) am Befestigungsabschnitt (42) angebracht ist.

5. Haltefeder nach einem der vorhergehenden Ansprüche, dadurch gekennzeichnet, daß die sich in Sekantenrichtung erstreckenden Federarme (16, 18) in einem Winkel bezüglich der Tangentialebene erstrecken, der im wesentlichen im Bereich von 5 bis 15° liegt.

6. Haltefeder nach einem der vorhergehenden Ansprüche, dadurch gekennzeichnet, daß die Endteile der Federarme (16, 18, 30) zur Rückenplatte (4) hin umgebogen sind.

7. Haltefeder nach einem der vorhergehenden Ansprüche, dadurch gekennzeichnet, daß an den Endteilen der Federarme (16, 18, 30) Ausformungen (26, 28, 38) vorgesehen sind.

8. Haltefeder nach einem der vorhergehenden Ansprüche, dadurch gekennzeichnet, daß die Breite des gebogenen, insbesondere S-förmigen Abschnittes (32) im wesentlichen der Breite des Befestigungsabschnittes (10) entspricht.

9. Haltefeder (8, 40, 124) für Bremsbeläge, insbesondere bei Teilbelag-Scheibenbremsen für Kraftfahrzeuge, mit einem Befestigungsabschnitt (10, 42, 126) zur Befestigung an einer Belagrückenplatte (4, 122) und mit Federarmen (16, 18, 30, 44, 46, 50, 140, 142, 164) zum Eingriff in ein Bremsenteil (20), wobei zwei Federarme (16, 18, 44, 46, 140, 142) sich, bezogen auf die Bremsscheibe, im wesentlichen in Sekantenrichtung erstrecken (Hauptfederrichtung) und ein dritter Federarm (30, 50, 164) im wesentlichen in radialer Richtung (Hauptfederrichtung) verläuft, nach einem der vorhergehenden Ansprüche, dadurch gekennzeichnet, daß die sich in Sekantenrichtung erstreckenden Federarme (140, 142) U- bzw. V-förmig umgebogene Abschnitte (144, 146) aufweisen.

10. Haltefeder nach Anspruch 9, dadurch gekennzeichnet, daß zwei den U- bzw. V-förmig umgebogenen Abschnitt bildende Schenkel der Federarme (140, 142) sich quer zur Sekantenrichtung erstrecken.

11. Haltefeder nach Anspruch 9 oder 10, dadurch gekennzeichnet, daß die sich in Sekantenrichtung erstreckenden Federarme (140, 142) Endabschnitte (148, 150) aufweisen, die sich im wesentlichen in Sekantenrichtung erstrecken und die an der Rückenplatte (122) so angeordnet sind, daß ihre Enden oberhalb der Mittellinie (186) des Bremskolbens (120) an diesem angreifen.

12. Haltefeder nach einem der Ansprüche 9 bis 11, dadurch gekennzeichnet, daß der sich im wesentlichen in radialer Richtung erstreckende Federarm (164) einen Endabschnitt (176) aufweist, der sich in radialer Richtung erstreckt.

13. Haltefeder nach einem der Ansprüche 9 bis 12, dadurch gekennzeichnet, daß alle Abschnitte der Federarme (140, 142, 164) in Ebenen liegen, die im wesentlichen senkrecht zur Rückenplatte verlaufen.

14. Haltefeder nach einem der vorhergehenden Ansprüche, dadurch gekennzeichnet, daß die sich im wesentlichen in Sekantenrichtung erstreckenden Federarme (140, 142) in axialer Richtung vorspringende Nasen (152, 154) aufweisen.

15. Haltefeder nach einem der vorhergehenden Ansprüche, dadurch gekennzeichnet, daß der sich im wesentlichen radial erstreckende Federarm (164) eine in axialer Richtung vorspringende Nase (178) aufweist.

# FIG.1

# FIG.2

# FIG.3

# FIG.4

FIG.5

FIG.6

FIG.7

FIG.8

# FIG.9